# EUROPEAN PATENT SPECIFICATION

(11) **EP 2 350 512 B1**
(45) Date of publication and mention of the grant of the patent: **17.04.2013**
(21) Application number: 09760244.5
(22) Date of filing: 13.10.2009
(51) Int. Cl.: F16L 5/04, F24F 13/02

(54) **FIRE RETARDANT STRUCTURES**
FLAMMHEMMENDE STRUKTUREN
STRUCTURES IGNIFUGES

(30) Priority: 11.10.2008 GB 0818679
(43) Date of publication of application: 03.08.2011
(73) Proprietor: Clough, Jonathan, Manchester M26 4JY (GB); McCann, Jamie, Manchester (GB)
(72) Inventor: McCANN, Jamie, Manchester (GB)
(74) Representative: Cameron, Stewart
(86) International application number: PCT/GB2009/002451
(87) International publication number: WO 2010/041045

(56) References cited:
- WO-A1-02/37011
- WO-A1-2005/046016
- US-A- 3 606 404

## Description

This invention relates to improvements in fire retardant structures, and in particular to devices for ducts and conduits through fire restraining walls and partitions.

Conduits and ducts through fire restraining partitions and walls are necessary to circulate services such as ventilating and hearing or air conditioning air in a building, but represent a point of weakness in a fire restraining partition, due to the fact that ducting or pipes of plastics material will quickly combust and if not prevented, allow flame and/or hot gases to escape via the port provided in the partition for the duct.

It is thus necessary for there to be some means of blocking the port to superheated gases or flame, to provide one or two hour fire resistance. For example in US 2003/0101668, a cylindrical sleeve formed from a length of expandable perforated material lines an aperture through a wall structure for passing of a pipe, duct or other conduit, and any gap due to size or shape differences between the conduit and the sleeve is sealed with an expandable, hardenable material such as an intumescent composition. Such so called "expandable metal" is relatively expensive, and the document only discloses formation of a cylindrical, or a spirally wrapped, sleeve about a round cross-sectioned pipe of conduit.

WO 02/37011 and WO 2005/046016 show other known solutions. US 3,606,404 shows a "duct-to-register connector" which is made from foldable sheet metal and could be used in such a system.

A further problem is that while a partition or fire retardant wall has a sound insulation effect, so that noise such as produced by proceeding or workshop machinery is at least significantly reduced in adjoining spaces. However, passages through the partition or wall have the effect of compromising the sound insulation properties of the wall as a whole, leading to possibly excessive transmitted noise at least near the conduit passing through the wall.

An object of this invention is to provide a liner for passage of a duct or conduit through a fire retaining wall or partition having a non-circular cross-section, such as square or rectangular, as is common for ventilation or air-conditioning ducts, conduits for power cables, telecommunications and similar leads.

According to the invention, a liner for passage of a duct through a fire-retaining wall or partition according to claim 1 is proposed, which comprises a polygonal body having a plurality of side walls of a fire-resistant or fire retardant sheet material, defining a passage through the volume enclosed by the side walls.

The side walls each are provided with flanges at each side and the flanges are each inwardly stepped with regard to the respective side walls, being connected to the-side walls by a short mutually perpendicular wall section. This defines an open end of the liner at each side, which is of lesser dimensions than the cross-section of the main body of the liner defined by the side walls. The stepped arrangement provides a means for locating the facing panels of a wall between the short wall section and the flanges.

In a preferred embodiment, the liner is fabricated from a performed blank of sheet material, having a pressed central portion, side wall portions, and edge portions, which are cut into separate flaps, to form said flanges.

The ends of the blank may be adapted for interconnection, for example, by provision of tabs on one end for connection to the other end.

The blank may be pressed and cut from a suitable fire resistant or fire retardant sheet material, especially of metal, such as stainless steel. The use of synthetic materials with suitable properties is not excluded however.

Preferably, the liner is dimensioned to enable openings defined by the flanges to fit snugly, but freely slidably, over a service duct or conduit which is to be passed through a wall or a partition.

Any gaps or free space is stopped by use of a fire retardant packaging, or intumescent, provided as a paint on the duct or within the flanges, or introduced by an injection gun. In particular, intumescent pads may be located between the liner and the conduit, and also provided with smoke sealing packings. These further may function as acoustic dampers.

The liner may also incorporate anti-vibration devices to dampen any vibration from the wall. The liner may also or instead be lined with a baro-foam or other sound attenuating with or without the intumescent.

A preferred embodiment of a liner according to the invention will now be further described by way of example, with reference to the accompanying drawings, in which:
Figure 1 is a perspective view of a liner in accordance with the invention;
Figure 2 is a sectional view showing the liner of Figure 1 installed in a wall and with a conduit in place;
Figure 3 is a plan view of a blank stainless steel sheet as cut ready for folding to form a liner according to Figure 1;
Figure 3a is a sectional view of line A-A of Figure 3 as folded; and
Figure 4 shows an intermediate stage in forming the liner from the blank of Figure 3.

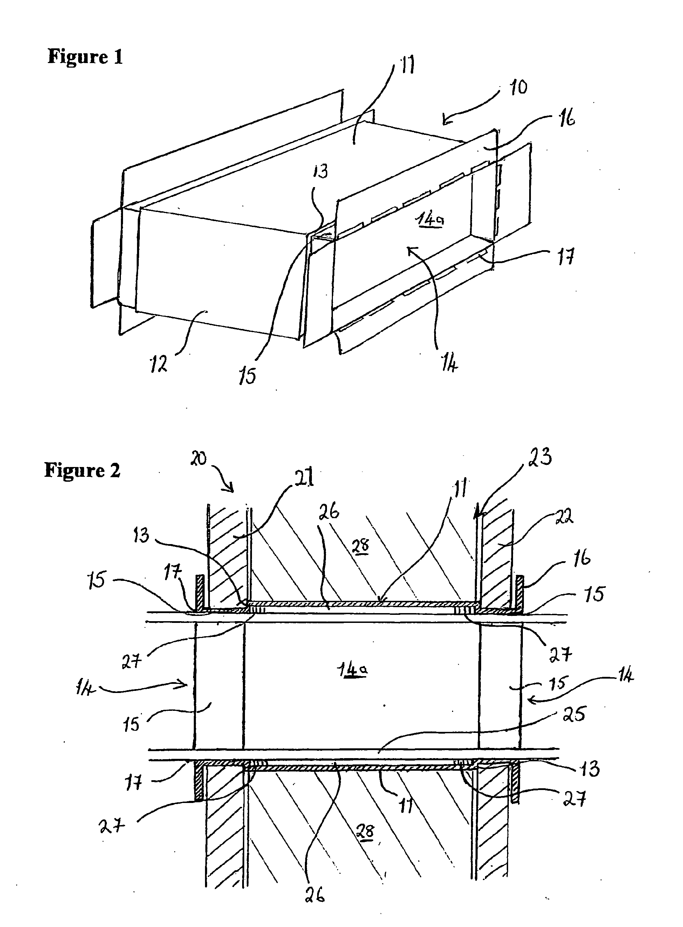

Figure 1 shows a perspective view of a liner 10 of sheet stainless steel, as installed but in isolation. The liner 10 comprises side walls 11, 12 which are folded to form a rectangular body, having open sides 14 to define a passage 14a therethrough. The open sides are framed by flanges 15, one of which is connected to each side wall 11,12, by a respective perpendicular step part 13, so that the flanges 15 define an opening 14 which is of smaller dimensions than the cross-section of the body 10. The flanges 15 each have an end part 16, defined by a row of slots or perforations 17, which are shown in Figure 1 as being turned outwardly from the flanges 15, to provide flaps which abut the surround of a hole provided in a wall 20 and may be used for purposes of securement to the wall 20.

Figure 2 shows-the liner 10 of Figure 1 in place in a wall or partition 20. The wall 20 has two facing panels 21, 22 one at each side, and a cavity 23 which may be hollow, containing structural framework only, or filled with thermal insulating material and/or fire retardant material. The facing panels are seated between the flanges 15 and the steps 13. The liner 10 fills the hole through the wall 20, and the flaps 16 provided by the flanges 15 are turned outwardly to abut the outer faces of the panels 21, 22, around the rim of the hole, and may be used with fasteners such as screws, or simply abut the outer faces of the panels 21, 22. A conduit or duct 25 passes through the passage 14a provided by the body 10, and abuts the flanges 15 to provide a snug but slidable fit.

Intumescent material pads 26 are provided between the duct 25 and inner wall 11, and smoke seal packings 27 are also provided at each end of the pads 26.

No further sealing is expected to be required, but if over-prevention is felt to be prudent, any loose joints may be packed, or injected with intumescent material, or the outer surface of the duct 25 may be painted with intumescent paint in the region of the flanges 15. The wall cavity 23 between the facing panels 21, 22 may be filled with a core 28 of thermal insulation material.

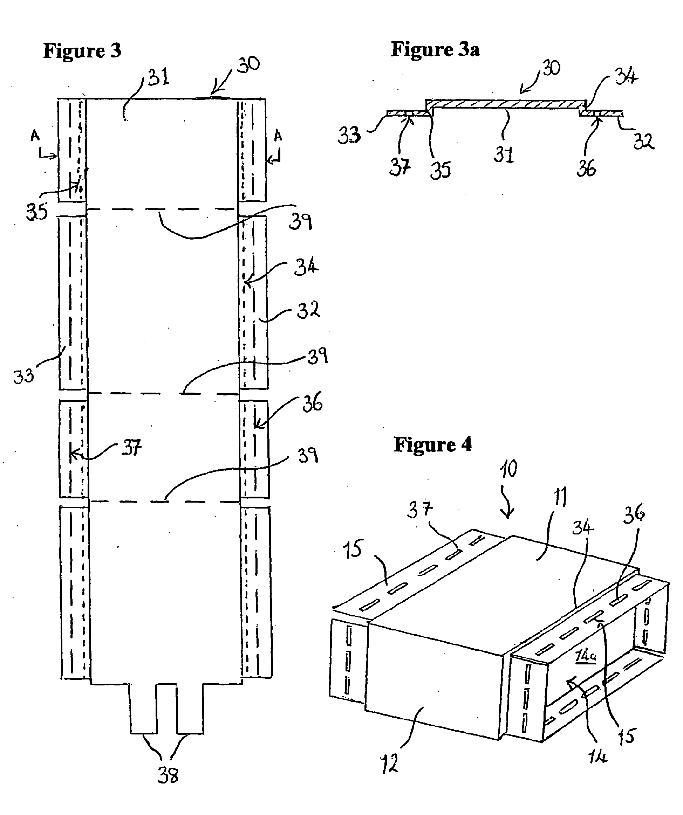

Figure 3 shows a preformed blank 30 of stainless steel sheet. This is press-formed to provide central regions 31, separated from edge regions 32, 33 by stops 34, 35 (see Figure 3a which is a cross-section on line A-A of Figure 3).

The edge regions 31, 32 are perforated by respective lines of slots 36, 37 extending parallel to the stops 34, 35 and the edges of the blank 30 and defining zones to either side. The blank 30 is prepared after press forming using a cutter to cut out sections of the edge regions to divide the same into flanges 15, two of which are relatively long and two relatively short, on each side.

One end of the blank 30 is provided with a pair of tabs 38, which can be used to connect the two ends of the blank 30 together, for example, by welding to the other end of the blank 30.

The blank 30, after pressing and cutting is folded along fold lines 39, to form walls 11, 12 which are mutually at right angles. The tabs 38 are welded to the other end of the blank 30 to close the arrangement. The result is a box-shaped liner body 10, as shown in Figure 4. The liner 10 has walls 11, 12 as in Figure 1, but the flanges 15 are not yet folded up along the lines of perforations 36, 37 to form the turned up end parts 16.

In use, the liner 10 is presented to a wall in the Figure 4 condition, and is inserted through a hole therein, until the flanges 15 on the leading side of the liner 10 extend fully out of the opposite side of the wall 20. The flanges 15 are then folded along the lines of perforations 36, 37 to form the flaps 16 which are abutted with the outer faces of the panels 21, 22 of the wall 20 around the hole, and the duct or conduit 25 inserted through the openings 14 of the liner 10, to result in the assembled condition shown in Figure 2.

To reduce the transmission of noise and vibration via the liner 10 and conduit 25, anti-vibration mounts can be provided between the outer faces of the walls 11, 12 of the liner 10 and the inner faces of the panels 21, 22 to dampen any vibration which might be transmitted from the wall 20 and rattle or resonate with the liner 10. An acoustic lining of bara® foam or other sound attenuating material can be provided on the outer faces of the walls 11, 12 of the liner 10.

The liner body 10 can of course be of any rectangular configuration, depending on the ratio of the lengths of the walls 11, 12, including square (equal side lengths). The configuration is not limited to a quadrilateral arrangement, as for special purposes other polygonal shapes such as pentagonal or hexagonal might be required.

The preferred material is galvanised steel sheet, but other suitable materials may be used, including suitable fire-retardant synthetics.

## Claims

1. A liner for passage of a duct (25) through a fire-retaining wall or partition (20) comprising a polygonal body (10) having a plurality of side walls (11,12) of a fire-resistant or fire retardant sheet material, defining a passage (14a) through the volume enclosed by the side walls (11,12), the side walls (11,12) each being provided with flanges (15) at each side which are inwardly stepped with regard to the respective side walls (11,12), and which are connected to the side walls (11,12) by a short mutually perpendicular wall section (13) such that the inwardly stepped flanges (15) define an open end (14) of the liner at each side, which is of lesser dimensions than the ross-section of the main body (10) of the liner defined by the side walls (11,12), wherein the stepped arrangement (13,15) provides a means for locating the facing panels (21, 22) of a wall (20) between the short wall section (13) and the flanges (15) **characterised in that** the flanges (15) each have an end part (16) defined by a row of slots or perforations (17) to allow the end parts (16) to be turned outwardly from the flanges (15) to provide flaps which abut the surround of a hole provided in the wall (20).

2. The liner according to claim 1, wherein the liner is fabricated from a preformed blank (30) of sheet material, having a pressed central portion (31), side wall portions (32,33), and edge portions, which are cut into separate flaps, to form said flanges (15).

3. The liner according to claim 2, wherein the ends of the blank (30) are adapted for interconnection by provision of tabs (38) on one end for connection to the other end.

4. The liner according to any one of claims 2 or 3, wherein the blank (30) is pressed and cut from a suitable fire resistant or fire retardant sheet material of metal.

5. The liner according to any one of claims 1 to 4, wherein the liner (30) is dimensioned to enable openings defined by the flanges (15) to fit snugly, but freely slidably, over a service duct or conduit (25) which is to be passed through a wall or a partition.

6. The liner according to claim 5, wherein any gaps or free space is stopped by use of intumescent pads (26) located between the liner and the conduit (25), and also provided with smoke sealing packings (27).

7. The liner according to claim 6, wherein the liner incorporates anti-vibration devices to dampen any vibration from the wall (20).

## Patentansprüche

1. Eine Auskleidung für den Durchgang eines Kanals (25) durch eine Feuerrückhalte-Wand oder -Abtrennung (20), die einen polygonalen Körper (10) mit einer Vielzahl von Seitenwänden (11, 12) eines feuerbeständigen bzw. feuerhemmenden Plattenmaterials umfasst, die einen Durchgang (14a) durch das Volumen, das von den Seitenwänden (11, 12) umschlossen ist, definieren, wobei jede der Seitenwände (11, 12) an jeder Seite mit Flanschen (15) versehen ist, die in Bezug auf die jeweiligen Seitenwände (11, 12) nach innen gestuft und durch einen kurzen beidseitig senkrechten Wandteilabschnitt (13) mit den Seitenwänden (11, 12) verbunden sind, so dass die nach innen gestuften Flansche (15) an jeder Seite ein offenes Ende (14) der Auskleidung definieren, das geringere Abmessungen aufweist als der Querschnitt des Hauptkörpers (10) der Auskleidung, die durch die Seitenwände (11, 12) definiert ist, wobei die gestufte Anordnung (13, 15) ein Mittel zur Positionierung der einander zugewandten Tafeln (21, 22) einer Wand (20) zwischen dem kurzen Wandteilabschnitt (13) und den Flanschen (15) bereitstellt, **dadurch gekennzeichnet, dass** die Flansche (15) jeweils einen Endteil (16) aufweisen, der durch eine Reihe von Schlitzen oder Perforationen (17) definiert ist, um zu ermöglichen, dass die Endteile (16) von den Flanschen (15) nach außen gedreht werden können, um Klappen bereitzustellen, die an die Einfassung eines in der Wand (20) bereitgestellten Lochs anstoßen.

2. Auskleidung nach Anspruch 1, wobei die Auskleidung aus einem vorgeformten Rohling (30) aus Plattenmaterial hergestellt ist, der einen gepressten zentralen Abschnitt (31), Seitenwandabschnitte (32, 33) und Randabschnitte aufweist, die zur Bildung der Flansche (15) in separate Klappen geschnitten werden.

3. Auskleidung nach Anspruch 2, wobei die Enden des Rohlings (30) zur gegenseitigen Verbindung angepasst sind, indem Laschen (38) an einem Ende zur Verbindung mit dem anderen Ende bereitgestellt werden.

4. Auskleidung nach einem der Ansprüche 2 oder 3, wobei der Rohling (30) aus einem geeigneten feuerbeständigen bzw. feuerhemmenden Plattenmaterial aus Metall gepresst und geschnitten ist.

5. Auskleidung nach einem der Ansprüche 1 bis 4, wobei die Auskleidung (30) bemessen ist, damit Öffnungen, die durch die Flansche (15) definiert sind, gut aber frei gleitend über einen Installationskanal oder ein Installationsrohr (25), der/das durch eine Wand oder eine Abtrennung geführt werden soll, passen.

6. Auskleidung nach Anspruch 5, wobei jegliche Lücken oder Freiräume durch die Verwendung von intumeszenten Polstern (26), die zwischen der Auskleidung und dem Rohr (25) positioniert sind, blockiert werden und auch mit rauchabdichtenden Umschließungen (27) versehen sind.

7. Auskleidung nach Anspruch 6, wobei die Auskleidung Schwingungsdämpfvorrichtungen zum Dämpfen jeglicher Schwingungen von der Wand (20) umfasst.

## Revendications

1. Une garniture pour le passage d'un conduit (25) à travers une cloison ou une paroi ignifuge (20) comportant un corps polygonal (10) ayant une pluralité de parois latérales (11, 12) d'un matériau en feuilles résistant au feu ou retardateur de feu, définissant un passage (14a) à travers le volume enfermé par les parois latérales (11, 12), les parois latérales (11, 12) étant chacune munies de brides (15) sur chaque côté qui sont étagées vers l'intérieur par rapport aux parois latérales respectives (11, 12), et qui sont raccordées aux parois latérales (11, 12) par une courte section de paroi mutuellement perpendiculaire (13) de telle sorte que les brides étagées vers l'intérieur (15) définissent une extrémité ouverte (14) de la garniture sur chaque côté, qui est de dimensions inférieures à la coupe transversale du corps principal (10) de la garniture définie par les parois latérales (11, 12), dans laquelle l'agencement étagé (13, 15) fournit un moyen pour situer les panneaux se faisant face (21, 22) d'une paroi (20) entre la courte section de paroi (13) et les brides (15), **caractérisée en ce que** les brides (15) ont chacune une partie d'extrémité (16) définie par un rang de fentes ou de perforations (17) pour permettre aux parties d'extrémité (16) d'être tournées vers l'extérieur par rapport aux brides (15) afin de fournir des rabats qui viennent buter contre le tour d'un trou prévu dans la paroi (20).

2. La garniture selon la revendication 1, dans laquelle la garniture est fabriquée à partir d'une découpe préformée (30) de matériau en feuilles, ayant une portion centrale pressée (31), des portions de parois latérales (32, 33), et des portions de bord, qui sont coupées en rabats séparés, pour former lesdites brides (15).

3. La garniture selon la revendication 2, dans laquelle les extrémités de la découpe (30) sont adaptées pour se raccorder entre elles par la fourniture de languettes (38) sur une extrémité pour un raccordement à l'autre extrémité.

4. La garniture selon n'importe laquelle des revendications 2 ou 3, dans laquelle la découpe (30) est pressée et coupée à partir d'un matériau en feuilles de métal résistant au feu ou retardateur de feu.

5. La garniture selon n'importe laquelle des revendications 1 à 4, dans laquelle la garniture (30) est dimensionnée pour permettre à des ouvertures définies par les brides (15) de s'ajuster de façon serrée, mais de façon à pouvoir coulisser librement, sur un conduit ou une conduite de service (25) qui est amené à être passé à travers une paroi ou une cloison.

6. La garniture selon la revendication 5, dans laquelle tout espacement ou espace libre est supprimé grâce à l'utilisation de coussinets intumescents (26) situés entre la garniture et la conduite (25), et également munis de remplissages étanches à la fumée (27).

7. La garniture selon la revendication 6, dans laquelle la garniture incorpore des dispositifs antivibrations pour amortir toute vibration provenant de la paroi (20).
